# EUROPÄISCHE PATENTANMELDUNG

(11) **EP 0 775 627 A1**
(43) Veröffentlichungstag der Anmeldung: **28.05.1997**
(21) Anmeldenummer: 96118844.8
(22) Anmeldetag: 25.11.1996
(51) Int. Cl.: B63B 35/70, B63B 1/40

(54) **Fahrzeugzusammenstellung bzw. Schiffszusammenstellung, bestehend aus mehreren Schiffsgefässen**

(30) Priorität: 25.11.1995 DE 19543950
(71) Anmelder: Zöllner, Joachim, Dipl.-Ing., 45478 Mülheim a. d. Ruhr (DE)
(72) Erfinder: Zöllner, Joachim, Dipl.-Ing., 45478 Mülheim a. d. Ruhr (DE)
(74) Vertreter: Funken, Josef, Dipl.-Ing.

(57) **Zusammenfassung**

Bei einer Fahrzeugzusammenstellung bzw. einer Schiffszusammenstellung, bestehend aus mehrere Schiffsgefäßen, nämlich einem schiebenden Triebfahrzeug 1 und wenigstens einem geschobenen Anhang 2 ist zwischen dem Vorschiff 14 des Triebfahrzeuges 1 und dem Heck 4 des Anhanges 2 innerhalb der Silhouette 7 bis 12 der Fahrzeugzusammenstellung ein Koppelbereich 5 gebildet. Innerhalb des Koppelbereiches 5 ist die Anordnung so getroffen, daß auf jeder Seite des Buges 3 wenigstens ein flexibler Ballon 12,13 aus reißfestem Material zum Auffüllen des Koppelbereiches 5 vorgesehen ist und daß an der Außenhaut 16 des Vorschiffes 14 Augen 22,23 aufgeschweißt und darin Schäkel 24,25 eingesetzt sind und daß Ringe 26,27 in das Ballonmaterial eingenäht sind, in die die Schäkel 24,25 einzuführen sind.

## Beschreibung

Die Erfindung betrifft eine Fahrzeugzusammenstellung bzw. Schiffszusammenstellung, bestehend aus mehreren Schiffsgefäßen, nämlich einem schiebenden Triebfahrzeug und wenigstens einem geschobenen Anhang, wobei das Triebfahrzeug mit einem strömungsgünstigen Bug ausgestattet ist und der Anhang ein Heck besitzt, das vor dem Bug des Triebfahrzeuges mit mechanischen Einrichtungen fixiert ist, und wobei zwischen dem Vorschiff des Triebfahrzeuges und dem Heck des Anhanges innerhalb der Silhouette der Fahrzeugzusammenstellung ein von Schiffsbauteilen freier Koppelbereich gebildet ist.

Nachdem im Verkehr der Binnenschiffe der Betrieb als Schleppschiffahrt nur noch eine sehr geringe Bedeutung im lokal begrenzten Flettverkehr, im Baustellenbetrieb und mit Lagerschiffen hat, sind derzeit
- das einzelfahrende Motorschiff in unterschiedlichen Größen und
- die Fahrzeugzusammenstellung bzw. Schiffszusammenstellung als Schubverband oder als Koppelverband in verschiedenen Formationen und Größen
von Bedeutung.

Einzelfahrende Motorschiffe, bei denen Lagerraum und Antriebsanlage in einem Schiffskörper bzw. Schiffsgefäß fest miteinander verbunden sind (sogenannte Selbstfahrer), machen sowohl von der Anzahl der Schiffe als auch von der Tragfähigkeit her etwa 70 % der Wasserfahrzeuge bzw. der Schiffe aus. Diese bekannten einzelfahrende Motorschiffe sind freizügig und im Flächenverkehr auf allen Wasserstraßen einsetzbar. Dabei erweist sich als vorteilhaft, daß sie nicht auf eine fremde Schlepp- oder Schubkraft angewiesen sind und durch eine günstige Unterwasserform eine höhere Fahrgeschwindigkeit erreichen können.

Bei den Fahrzeugzusammenstellungen bzw. den Schiffszusammenstellungen werden Schubverbände und Koppelverbände unterschieden.

Schiffszusammenstellungen bestehen mindestens aus zwei Schiffsgefäßen, die mit mechanischen Einrichtungen fixiert sind. Zwischen den Schiffsgefäßen verbleibt in Längs-, Quer- und Hochrichtung ein Wasservolumen aufgrund der Zuschärfung der jeweiligen Schiffsenden. Dieser Bereich zwischen den Schiffsenden bzw. den einzelnen Schiffsgefäßen wird mit Koppelbereich oder Koppelstelle bezeichnet. Der Koppelbereich bzw. die Koppelstelle stellt bei einer Schiffszusammenstellung eine Unstetigkeit in der äußeren Hülle der Schiffszusammenstellung auf.

Ein Schubverband besteht normalerweise aus einem Schubboot und einem oder mehreren geschobenen Schiffsgefäßen, beispielsweise Motorschiffen, Kähnen oder Schubleichtern. Statt des Schubbootes kann auch ein schiebendes Motorschiff Verwendung finden, wobei in diesem Falle der Schubverband aus dem schiebenden Motorschiff und einem oder mehreren geschobenen Schiffsgefäßen, beispielsweise Motorschiffen, Kähnen oder Schubleichtern besteht.

Als Koppelverband wird eine Fahrzeugzusammenstellung bzw. Schiffszusammenstellung bezeichnet, die aus einem schiebenden Motorschiff und einem geschobenen Schubleichter besteht.

Bei Schubverbänden, die etwa 30 % der Fahrzeuge bzw. Schiffe ausmachen, werden unbesetzte Schubleichter, die in den meisten Fällen kastenförmig gebaut und genormt sind, neben- und hintere inander gekoppelt von einem starken Schubboot oder einem Motorgüterschiff geschoben, mit dem sie starr oder auch gelenkig zu einer nautischen Einheit verbunden sind.

Die Höchstabmessungen der Schubverbände sind in den Polizeiverordnungen festgelegt. Im großstromigen und regelmäßig anfallenden Massengutverkehr auf einem Fluß zwischen zwei festen Punkten stellt der klassische Schubverband mit vier oder sechs Schubleichtern das rationellste Betriebsmittel dar, während beim schiebenden Selbstfahrer mit Schubleichter die Vorzüge des flexiblen Einzelfahrers mit den Kostenvorteilen eines herkömmlichen Schubverbandes kombiniert werden können. Er kann dem aktuellen Ladungsaufkommen angepaßt werden und eignet sich einspurig auch für schmalere Wasserstraßen.

Bei dem schiebenden Triebfahrzeug der Fahrzeugzusammenstellung bzw. Schiffszusammenstellung handelt es sich entweder um ein Schubboot oder um ein Motorgüterschiff. Als geschobener Anhang der Fahrzeugzusammenstellung bzw. Schiffszusammenstellung kommen unterschiedliche Schiffsgefäße in Frage, beispielsweise Motorschiffe, Kähne oder Schubleichter.

Eine Fahrzeugzusammenstellung mit einem Schubboot als schiebendem Triebfahrzeug sowie auch eine Fahrzeugzusammenstellung mit einem Motorgüterschiff als schiebendem Triebfahrzeug stellen Schubverbände dar, während eine Fahrzeugzusammenstellung mit einem Motorgüterschiff als schiebendem Triebfahrzeug und einem geschobenen Schubleichter als geschobenen Anhang einen Koppelverband darstellt.

Das schiebende Motorschiff eines bekannten Koppelverbandes weist einen üblichen strömungsgünstigen Bug auf, so daß dieses Motorschiff universell einsetzbar ist, nämlich sowohl im Schubbetrieb als auch in der Einzelfahrt bzw. der Alleinfahrt. Vergleichbares gilt auch für den Schubleichter, der wegen seines kastenförmigen Hecks auch in einem Koppelverband mit einem anderen schiebenden Motorschiff einsetzbar ist. Die beiden den Koppelverband bildenden Fahrzeuge, nämlich das schiebende Motorgüterschiff und der geschobene Schubleichter sind gemeinsam und unabhängig voneinander, also universell einsetzbar.

Dem Vorteil der universellen Einsetzbarkeit des Motorschiffes und des Schubleichters steht der Nachteil gegenüber, daß zwischen dem Bug des schiebenden Motorschiffes und dem Heck des geschobenen Schubleichters innerhalb der Silhouette des Koppelverbandes ein ziemlich großer Koppelbereich gebildet ist, der von Schiffsbauteilen frei ist. Daher bildet sich während der Fahrt des Koppelverbandes in und an diesem Koppelbereich ein Wirbel, der einen beträchtlichen Teil der Antriebsleistung des schiebenden Motorgüterschiffes aufzehrt.

Bei einem anderen bekannten Koppelverband ist der Bug des schiebenden Motorschiffes als Kastenbug ausgebildet, der das gespiegelte Gegenstück zum Schubleichterheck darstellt. Bei diesem Koppelverband gibt es keinen nennenswerten Koppelbereich sondern nur eine Koppelstelle, an der der Bug des Motorschiffes und das Heck des Schubleichters gegeneinander liegen. Dadurch wird die Wirbelbildung nahezu vollständig verhindert.

Diesem Vorteil steht jedoch der erhebliche Nachteil gegenüber, daß die Einzelfahrt bzw. die Alleinfahrt des beladenen Motorschiffes aufgrund des großen Widerstandes des Kastenbuges wirtschaftlich nicht vertretbar ist. Damit ist die Möglichkeit des universellen Einsatzes des schiebenden Motorschiffes nicht mehr gegeben.

In einem weiteren bekannten Koppelverband ist das Heck des Schubleichters paßgenau als Gegenstück zu dem Stevenbug des schiebenden Motorschiffes ausgebildet. Auch hierdurch wird die Wirbelbildung nahezu vollständig verhindert. Aber auch diesem Vorteil gegenüber steht der Nachteil, daß der dem Bug des schiebenden Motorschiffes genau angepaßte Schubleichter nicht mehr universell, sondern nur mit dem entsprechenden Bug im Schubbetrieb eingesetzt werden kann.

Der Erfindung liegt die Aufgabe zugrunde, eine Fahrzeugzusammenstellung bzw. Schiffszusammenstellung so auszubilden, daß im Koppelbereich zwischen den einander gegenüber befindlichen Schiffsenden die Wirbelbildung wesentlich vermindert ist und dennoch der universelle Einsatz des schiebenden Triebfahrzeuges, also des Schubbootes bzw. des Motorgüterschiffes, und des geschobenen Anhanges, also insbesondere des Schubleichters, beibehalten werden.

Diese Aufgabe wird erfindungsgemäß dadurch gelöst,
- daß auf jeder Seite des Buges wenigstens ein flexibler Ballon aus reißfestem Material zum Auffüllen des Koppelbereiches vorgesehen ist,
- daß die Ballone weitgehend der Form des Koppelbereiches oder eines Teiles davon angepaßt sind und
- daß die Ballone am Vorschiff lösbar befestigt sind, wobei die innenseitigen Flächen der Ballone gegen die Außenhaut des Vorschiffes liegen, die außenseitigen Flächen der Ballone bis höchstens an die Silhouette der Fahrzeugzusammenstellung im Koppelbereich heranreichen und die vorderen Flächen der Ballone gegen das Heck des Anhanges liegen.

Auf diese Weise gelangt man zu einer Fahzeugzusammenstellung bzw. Schiffszusammenstellung der einleitend genannten Art, deren Koppelbereich mit einer flexiblen Auffüllung versehen ist, wodurch die Wirbelbildung in dem Koppelbereich zwischen den einander gegenüber befindlichen Schiffsenden wesentlich vermindert ist, ohne daß dadurch der Einsatz des schiebenden Triebfahrzeuges also des Schubbootes bzw. des Motorschiffes, oder des geschobenen Anhanges, also insbesondere des Schubleichters eingeschränkt ist. Das bedeutet, daß der universelle Einsatz eines Motorschiffes mit einem strömungsgünstigen Bug möglich bleibt. Somit sind Änderungen und Anpassungen am Schiffskörper selbst nicht erforderlich, um die Wirbelbildung in dem Koppelbereich wesentlich zu vermindern.

Das Material der Ballone ist reißfest, ähnlich dem im Freizeitschiffahrtsbereich eingesetzten Fendermaterial oder dem Schürzenmaterial eines Hoovercraftschiffes. Auf jeder Seite des Buges ist wenigstens ein Ballon zum Auffüllen des Koppelbereiches vorgesehen. Falls der Koppelbereich für die Auffüllung durch einen Ballon allein zu groß ist, können auf jeder Seite zwei oder mehr Ballone vorgesehen sein.

Die Ballone haben weitgehend die Form des Koppelbereiches oder eines Teiles davon. Dadurch ist sichergestellt, daß der Koppelbereich zumindest in seinem äußeren Bereich mit Ballonen so aufgefüllt ist, daß die Ballone weder seitlich aus der Silhouette des Koppelverbandes herausragen noch über den Bug hinaus nach vorn abstehen. Hierdurch nimmt der Koppelverband strömungsmäßig die Form eines über seine gesamte Länge im wesentlichen durchgehenden Körpers an, an dem die Wirbelbildung stark herabgesetzt ist.

In weiterer Ausgestaltung der Erfindung kann vorgesehen sein, daß das Triebfahrzeug eine über der Wasserlinie angeordnete Schubbühne aufweist sowie der Anhang ein kastenförmiges Heck hat, das vor dem Bug des Triebfahrzeuges mit mechanischen Einrichtungen fixiert ist.

Die Ballone weisen zweckmäßig eine Ummantelung auf, wobei die untere Ummantelung bis an die Silhouette der Fahrzeugzusammenstellung heranreicht und der zur Schiffsmitte geneigte Teil der Ummantelung an der Außenhaut des Vorschiffes anliegt.

Durch diese Ummantelung ist sichergestellt, daß die einzelnen Ballone an der vorgesehenen Stelle bleiben und sich nicht ungewollt von dort wegbewegen. Außerdem lassen sich hierdurch eventuelle Beschädigungen durch Treibgut bzw. Geschiebematerial aus der Flußsohle vermeiden.

Zweckmäßig kann vorgesehen sein, daß an der Außenhaut des Vorschiffes Augen aufgeschweißt sowie darin Schäkel eingesetzt sind und daß Ringe in dem Ballonmaterial eingenäht sind, in die die Schäkel einzuführen sind.

Diese Befestigungsart der Ballone an dem Vorschiff stellt einen konstruktiv einfachen und kostengünstigen Aufbau der flexiblen Ausfüllung des Koppelbereiches dar. Hinzu kommt, daß eine einfache Demontagemöglichkeit bei leerem Schiff gegeben ist. Auch hierdurch wird das Universalprinzip beibehalten, nämlich die Möglichkeit des Schubbetriebes und der Einzelfahrt bzw. Alleinfahrt beider die Fahrzeugzusammenstellung bzw. Schiffszusammenstellung bildenden Fahrzeuge bzw. Schiffsgefäße.

Zweckmäßig ist in Längsrichtung des schiebenden Triebfahrzeuges gesehen je nach dessen Form etwa in 0,5 m ein Auge an der Außenhaut des Vorschiffes angeschweißt. Dadurch können die Ballone in kurzen Abständen am Vorschiff befestigt werden.

Des weiteren kann zweckmäßig vorgesehen sein, daß die Ballone mit Luft und/oder einem anderen Gas sowie mit Wasser und/oder einer anderen Flüssigkeit gefüllt sind sowie unter Überdruck stehen.

Hierdurch entfalten die Ballone ihr Volumen. Durch die Teilfüllung mit Wasser oder einer anderen Flüssigkeit wird der Auftrieb der im übrigen mit Luft oder einem anderen Gas gefüllte Ballone in Grenzen gehalten. Im aufgefüllten Zustand wirken die Ballone derart, daß die Wirbelausbildung im Ballonbereich nicht stattfinden kann, was zu einer erheblichen Verringerung der Wirbelgröße führt und eine entsprechende Verringerung der erforderlichen Antriebsleistung zur Folge hat.

Die Erfindung wird nachfolgend anhand eines in der Zeichnung dargestellten Ausführungsbeispieles in Form eines Koppelverbandes des näheren erläutert. Es zeigt
- Fig. 1: einen bekannten Koppelverband in der Seitenansicht,
- Fig. 2: eine Draufsicht auf Figur 1,
- Fig. 3: eine Seitenansicht auf den erfindungsgemäß ausgebildeten Bugbereich des Motorschiffes und den Heckbereich des Schubleichters,
- Fig. 4: eine Draufsicht auf Figur 3 und
- Fig. 5: eine Ansicht auf den Bugbereich des Motorschiffes in Richtung des Pfeiles V der Figur 4.

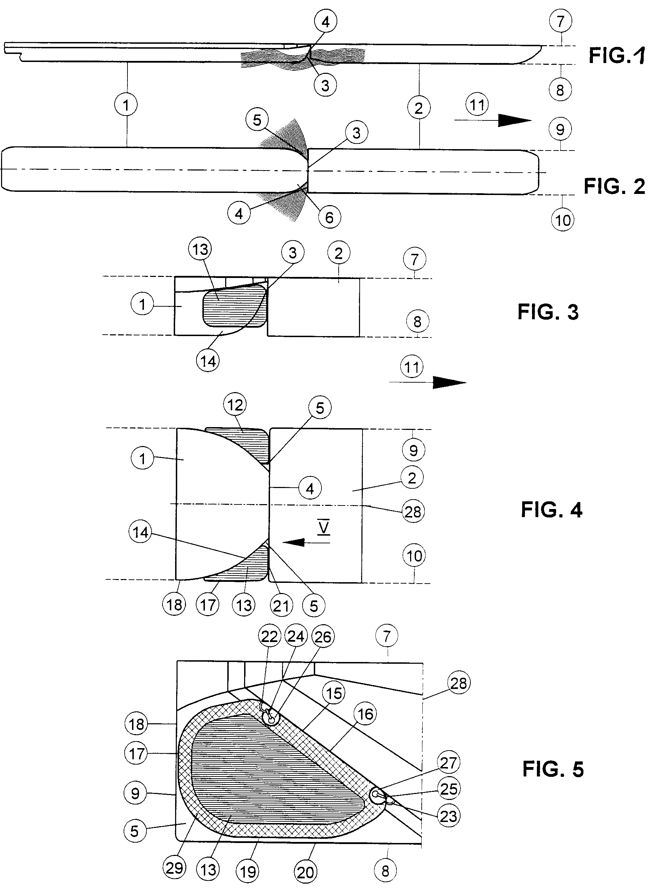

In Figur 1 und Figur 2 ist ein bekannter Koppelverband dargestellt, der aus einem schiebenden Gütermotorschiff 1 und einem geschobenen Schubleichter 2 besteht. Das schiebende Motorgüterschiff 1 ist mit einem strömungsgünstigen Bug 3 ausgestattet. Der Schubleichter 2 hat ein kastenförmiges Heck 4, das vor dem Bug 3 des Motorschiffes 1 befestigt ist. Wegen der normalen strömungsgünstigen Formgebung des Buges 3 ist an der Koppelstelle zwischen dem Motorschiff 1 und dem Schubleichter 2 ein Koppelbereich 5 ausgebildet, der sich zwischen dem Vorschiff 6 des Motorschiffes 1 und dem Heck 4 des Schubleichters 2 innerhalb der Silhouette 7,8,9,10 des Koppelverbandes befindet. Während der Fahrt des Koppelverbandes 1,2 in Fahrtrichtung 11 bildet sich in und an dem Koppelbereich 5 ein Wirbel, der an der starken Bugwelle erkennbar ist und einen erheblichen Teil der Antriebsleistung des schiebenden Motorschiffes 1 aufzehrt.

Der erfindungsgemäß ausgebildete Koppelverband ist in den Figuren 3 bis 5 dargestellt. Zu beiden Seiten des Buges 3 ist je ein flexibler Ballon 12 und 13 aus reißfestem Material zum Auffüllen des Koppelbereiches 5 vorgesehen. Der in Fahrtrichtung 11 des Koppelverbandes vorgesehene flexible Ballon 13 ist weitgehend der Form des Koppelbereiches 5 angepaßt, damit der Koppelbereich 5 möglichst vollständig von dem Ballon 13 ausgefüllt wird. Der Ballon 13 ist am Vorschiff 14 lösbar befestigt. Dabei liegt die innenseitige Fläche 15 des Ballons 13 gegen die Außenhaut 16 des Vorschiffes 14.

Die außenseitige Fläche 17 des Ballons 13 steht geringfügig hinter der Bordwand 18, die gleichzeitig auch die Silhouette 9 des Koppelverbandes darstellt, zurück, so daß sie die Silhouette 9 im Koppelbereich 5 mitbildet.

Die untere Fläche 19 des Ballons 13 verläuft ebenfalls nur geringfügig innerhalb der Silhouette 8 bzw. mit geringem Abstand von dem Boden 20 des Motorschiffes 1 bzw. des Schubleichters 2. Mit der Vorderfläche 21 des Ballons 13, die senkrecht zur außenseitigen Fläche 17 verläuft, liegt der Ballon 13 gegen das Heck 4 des Schubleichters 2.

An der Außenhaut 16 des Vorschiffes 14 sind mehrere Augen 22,23 angeschweißt, in denen Schäkel 24,25 eingesetzt sind. Außerdem sind Ringe 26,27 in das Ballonmaterial eingenäht, in die die Schäkel 24,25 einzuführen sind.

Des weiteren weist der Ballon 13 eine Ummantelung 29 auf, wobei die untere Ummantelung 29 bis an den Boden 20 des Koppelverbandes heranreicht und der zur Schiffsmitte 28 geneigte Teil der Ummantelung 29 an der Außenhaut 15 des Vorschiffes 14 anliegt.

In Längsrichtung des Schiffes 1 gesehen ist etwa je 0,5 m ein Auge 22,23 an der Außenhaut 16 des Vorschiffes 14 angeschweißt.

Der Ballon 13 ist zum Teil mit Wasser und zum anderen Teil mit Luft unter Überdruck gefüllt.

### Bezugszeichenliste

- 1: Motorschiff
- 2: Schubleichter
- 3: Bug
- 4: Heck
- 5: Koppelbereich
- 6: Vorschiff
- 7-10: Silhouette
- 11: Fahrtrichtung
- 12: Ballon
- 13: Ballon
- 14: Vorschiff
- 15: innenseitige Fläche des Ballons
- 16: Außenhaut des Vorschiffes
- 17: außenseitige Fläche des Ballons
- 18: Bordwand
- 19: untere Fläche des Ballons
- 20: Boden
- 21: vordere Fläche des Ballons
- 22: Auge
- 23: Auge
- 24: Schäkel
- 25: Schäkel
- 26: Ring
- 27: Ring
- 28: Schiffsmitte
- 29: Ummantelung

## Patentansprüche

1. Fahrzeugzusammenstellung bzw. Schiffszusammenstellung, bestehend aus mehreren Schiffsgefäßen, nämlich einem schiebenden Triebfahrzeug und wenigstens einem geschobenen Anhang, wobei das Triebfahrzeug mit einem strömungsgünstigen Bug ausgestattet ist und der Anhang ein Heck besitzt, das vor dem Bug des Triebfahrzeuges mit mechanischen Einrichtungen fixiert ist, und wobei zwischen dem Vorschiff des Triebfahrzeuges und dem Heck des Anhanges innerhalb der Silhouette der Fahrzeugzusammenstellung ein von Schiffsbauteilen freier Koppelbereich gebildet ist,
**dadurch gekennzeichnet,**
- daß auf jeder Seite des Buges (3) wenigstens ein flexibler Ballon (12,13) aus reißfestem Material zum Auffüllen des Koppelbereiches (5) vorgesehen ist,
- daß die Ballone (12,13) weitgehend der Form des Koppelbereiches (5) oder eines Teiles davon angepaßt sind und
- daß die Ballone (12,13) am Vorschiff (14) lösbar befestigt sind, wobei die innenseitigen Flächen (15) der Ballone (12,13) gegen die Außenhaut (16) des Vorschiffes (14) liegen, die außenseitigen Flächen (17) der Ballone (12,13) bis höchstens an die Silhouette (7 bis 10) der Fahrzeugzusammenstellung im Koppelbereich heranreichen und die vorderen Flächen (21) der Ballone (12,13) gegen das Heck (4) des Anhanges (2) liegen.

2. Fahrzeugzusammenstellung nach Anspruch 1, dadurch gekennzeichnet, daß das Triebfahrzeug (1) eine über der Wasserlinie angeordnete Schubbühne aufweist sowie der Anhang (2) ein kastenförmiges Heck (4) hat, das vor dem Bug (3) des Triebfahrzeuges (1) mit mechanischen Einrichtungen fixiert ist.

3. Fahrzeugzusammenstellung nach Anspruch 1 oder 2, dadurch gekennzeichnet, daß die Ballone (12, 13) eine Ummantelung aufweisen, wobei die untere Ummantelung bis an die Silhouette (7 bis 10) der Fahrzeugzusammenstellung heranreicht und der zur Schiffsmitte (28) geneigte Teil der Ummantelung an der Außenhaut (16) des Vorschiffes (14) anliegt.

4. Fahrzeugzusammenstellung nach einem der vorhergehenden Ansprüche, dadurch gekennzeichnet, daß an der Außenhaut (16) des Vorschiffes (14) Augen (22,23) aufgeschweißt sowie darin Schäkel (24,25) eingesetzt sind und daß Ringe (26,27) in dem Ballonmaterial eingenäht sind, in die die Schäkel (24,25) einzuführen sind.

5. Fahrzeugzusammenstellung nach einem der vorhergehenden Ansprüche, dadurch gekennzeichnet, daß in Längsrichtung des Triebfahrzeuges (1) gesehen etwa je 0,5 m ein Auge (22,23) an der Außenhaut (16) des Vorschiffes (14) angeschweißt ist.

6. Fahrzeugzusammenstellung nach einem der vorhergehenden Ansprüche, dadurch gekennzeichnet, daß die Ballone (12,13) mit Luft und/oder einem anderen Gas sowie mit Wasser und/oder einer anderen Flüssigkeit gefüllt sind sowie unter Überdruck stehen.
